(19) Europäisches Patentamt

European Patent Office

Office européen des brevets

(11) **EP 1 108 866 B1**

(12) **EUROPÄISCHE PATENTSCHRIFT**

(45) Veröffentlichungstag und Bekanntmachung des Hinweises auf die Patenterteilung:
**19.10.2005 Patentblatt 2005/42**

(51) Int Cl.⁷: **F01N 9/00**, F01N 3/023, B01D 46/44, F02D 41/02

(21) Anmeldenummer: **00126405.0**

(22) Anmeldetag: **05.12.2000**

(54) **Verfahren zur Ermittlung eines Beladungszustandes eines Partikelfilters einer Verbrennungskraftmaschine**

Method to determine the loading state of a particulate filter of an internal combustion engine

Appareil pour déterminer l'état de chargement d'un filtre à particules d'un moteur à combustion interne

(84) Benannte Vertragsstaaten:
**AT BE CH CY DE DK ES FI FR GB GR IE IT LI LU MC NL PT SE TR**

(30) Priorität: **17.12.1999 DE 19961159**

(43) Veröffentlichungstag der Anmeldung:
**20.06.2001 Patentblatt 2001/25**

(73) Patentinhaber: **Volkswagen Aktiengesellschaft 38436 Wolfsburg (DE)**

(72) Erfinder:
 • **Standt, Ulrich-Dieter, Dr. 38527 Meine (DE)**

 • **Weidmann, Kurt, Dipl.-Ing. 38444 Wolfsburg (DE)**

(74) Vertreter: **Meyer, Enno et al Augsburger Strasse 24 82110 Germering (DE)**

(56) Entgegenhaltungen:
 **DE-A- 19 838 032      US-A- 5 319 930**

 • **PATENT ABSTRACTS OF JAPAN vol. 009, no. 238 (M-416), 25. September 1985 (1985-09-25) & JP 60 093109 A (ISUZU JIDOSHA KK), 24. Mai 1985 (1985-05-24)**

**Beschreibung**

Die Erfindung betrifft ein Verfahren zur Ermittlung eines Beladungszustandes eines Partikelfilters einer Verbrennungskraftmaschine, insbesondere eines Dieselmotors.

Es ist bekannt, Partikelfilter zur Entfernung von festen Partikeln aus Abgasen von Verbrennungskraftmaschinen, insbesondere für die Entfernung von Rußbestandteilen aus Abgasen von Dieselmotoren, einzusetzen. Neben der Reduzierung von Schadstoffen in der Abluft erfüllen Partikelfilter die Aufgabe, einen stromabwärts geschalteten Katalysator vor Verunreinigungen zu schützen, die diesen zerstören könnten.

Für die Aufrechterhaltung ihrer Funktionsfähigkeit müssen Partikelfilter in regelmäßigen Abständen einem Regenerationsprozeß unterzogen werden, um eine ursprüngliche Beladungskapazität wieder herzustellen. Hierfür sind verschiedene Regenerationsmethoden bekannt. Bei der thermischen Regeneration wird die Katalysatortemperatur so weit erhöht, daß es zu einer Entzündung und Verbrennung der dem Filter anhaftenden Partikel kommt. Die Temperaturerhöhung wird beispielsweise durch Aufheizen einer Zone im Anfangsbereich des Partikelfilters erreicht. Eine weitere Methode besteht in einer Erhöhung einer Abgastemperatur, die entweder durch Aufheizen eines Abgasstroms vor dem Partikelfilter mittels einer Heizvorrichtung erfolgen kann oder durch geeignete Einflußnahme auf den Betriebszustand der Kraftmaschine, etwa durch Nacheinspritzung, Änderung einer Drosselklappenstellung und/ oder Änderung einer Abgasrückführrate. Ferner kann die Regeneration additivgestützt erfolgen, wobei eine Additivzudosierung zum Kraftstoff oder Additiveindüsung vor dem Partikelfilter eine Absenkung einer Rußentzündungstemperatur bewirkt.

Eine Steuerung der Regeneration eines Partikelfilters kann entweder passiv oder aktiv betrieben werden. Im Falle der passiven Durchführung führt eine hohe Partikelbeladung des Filters zu einem starken Druckanstieg vor dem Filter, bis schließlich die Abgastemperatur so weit erhöht ist, daß ein spontaner Partikelabbrand ausgelöst wird. Die extreme Temperaturerhöhung des Abgases und der zuweilen sehr heftig ablaufende Partikelabbrand der passiv betriebenen Regeneration birgt die Gefahr einer irreversiblen Schädigung des Partikelfilters. In einfachen, aktiv betriebenen Verfahren wird üblicherweise eine zurückgelegte Fahrstrecke oder eine Betriebsdauer der Verbrennungskraftmaschine für die Durchführung der Regeneration des Filters in festen Intervallen zugrunde gelegt. Dabei wird der Regenerationstakt derart ausgelegt, daß auch unter extremen Betriebsbedingungen, bei denen es zu vermehrtem Rußausstoß kommt, die Funktionsfähigkeit des Partikelfilters gewährleistet wird. Infolgedessen wird die Regeneration häufiger als gemäß einem tatsächlichen Beladungswert des Filters durchgeführt. Dies führt zu einem verstärkten thermischen Verschleiß des Partikelfilters sowie zu einem erhöhten Kraftstoffverbrauch. Insgesamt wird in den bekannten Verfahren in Ermangelung an Kenntnis des tatsächlichen Beladungszustandes des Partikelfilters der Regenerationsvorgang entweder zu selten, wie bei der passiven Betreibung, oder zu häufig, wie bei den aktiven Verfahren, durchgeführt.

US-A-5319930 zeigt ein Verfahren zur Ermittlung eines Beladungszustandes eines Partikelfilters einer Verbrennungskraftmaschine, insbesondere eines Dieselmotors, wobei basierend auf der Erfassung wenigstens eine aktuellen Betriebsparameters der Verbrennungskraftmaschine in vorgebbaren zeitintervallen eine im aktuellen Zeitintervall durchgesetzte Rußmaße berechnet und durch Summierung der durchgesetzten Rußmasse verstrichener Zeitintervalle eine integrale Rußbeladung ermittelt wird.

Ein im wesentlichen ähnliches Verfahren ist in der JP-A-60093109 beschrieben.

Der vorliegenden Erfindung liegt die Aufgabe zugrunde, ein verfahren zur Ermittlung des Beladungszustandes eines Partikelfilters mit den im Oberbegriff des Hauptanspruchs genannten Merkmalen vorzuschlagen, so dass der Regenerationsprozeß optimal auf den tatsächlichen Bedarf abgestimmt werden.

Diese Aufgabe wird durch ein Verfahren mit den Merkmalen des Anspruchs 1 gelöst. Bevorzugte Ausgestaltungen der Erfindung sind Gegenstand der Unteransprüche.

Dadurch, daß basierend auf der Erfassung wenigstens eines aktuellen Betriebsparameters der Verbrennungskraftmaschine in vorgebbaren Zeitintervallen eine im aktuellen Zeitintervall durchgesetzte Rußmasse berechnet und durch Summierung der durchgesetzten Rußmassen aller verstrichener Zeitintervalle eine integrale Rußbeladung ermittelt wird, kann der Beladungszustand des Partikelfilters mit hoher Genauigkeit berechnet und der optimale Zeitpunkt für eine Regenerationsauslösung ermittelt werden.

Es ist bevorzugt, die integrale Rußbeladung mit einem vorgebbaren Grenzwert für die Rußbeladung abzugleichen und bei Überschreitung des Grenzwertes einen Regenerationsvorgang des Partikelfilters auszulösen. Die eigentliche Regeneration kann dann mit Hilfe eines an sich bekannten thermisch oder additiv gestützten Regenerationsverfahrens durchgeführt werden.

Als Betriebsparameter für die Berechnung der durchgesetzten Rußmasse werden eine angesaugte Luftmasse, eine zugeführte Kraftstoffmasse und/oder eine Motordrehzahl zugrunde gelegt. Um das Verfahren einfacher zu gestalten, kann auf die Einbeziehung von einem oder zwei der genannten Betriebsparameter für die Berechnung der in einem Zeitintervall durchgesetzten Rußmasse verzichtet werden. In diesem Fall muß jedoch eine geringfügige Einbuße der Genauigkeit des Verfahrens in Kauf genommen werden.

Um auf der anderen Seite das Verfahren mit einer größeren Genauigkeit zu gestalten werden, zusätzliche Betriebsparameter, nämlich eine Abgastem-

peratur vor dem Partikelfilter, eine Temperatur des Partikelfilters, und/oder den atmosphärischen Druck in die Berechnung der im aktuellen Zeitintervall durchgesetzten Rußmasse einfließen zu lassen.

In vielen Fällen sind die exakten Zusammenhänge zwischen einem Betriebsparameter und einer produzierten Rußmasse nur unzureichend oder gar nicht bekannt. Somit liegt ein theoretisches Modell nur in Einzelfällen vor. Aus diesem Grunde wird die Ermittlung der durchgesetzten Rußmasse mittels empirischer Modelle durchgeführt so daß die eingelagerte Rußmasse durch Abgleich der relevanten Betriebsparameter mit einem zuvor abgelegten Kennfeld erfaßt wird.

Weitere bevorzugte Ausgestaltungen der Erfindung ergeben sich aus den übrigen, in den Unteransprüchen genannten Merkmalen.

Die vorliegende Erfindung wird nachfolgend in Ausführungsbeispielen anhand der zugehörigen Zeichnungen näher erläutert. Es zeigen:

Figur 1    den Verlauf eines Rußmassenstroms einer Verbrennungskraftmaschine in Abhängigkeit von der Zeit;

Figur 2    einen Verlauf einer integralen Rußmasse einer Verbrennungskraftmaschine in Abhängigkeit von der Zeit und

Figur 3    eine Anordnung eines Partikelfilters in einem Abgasstrang eines Dieselmotors.

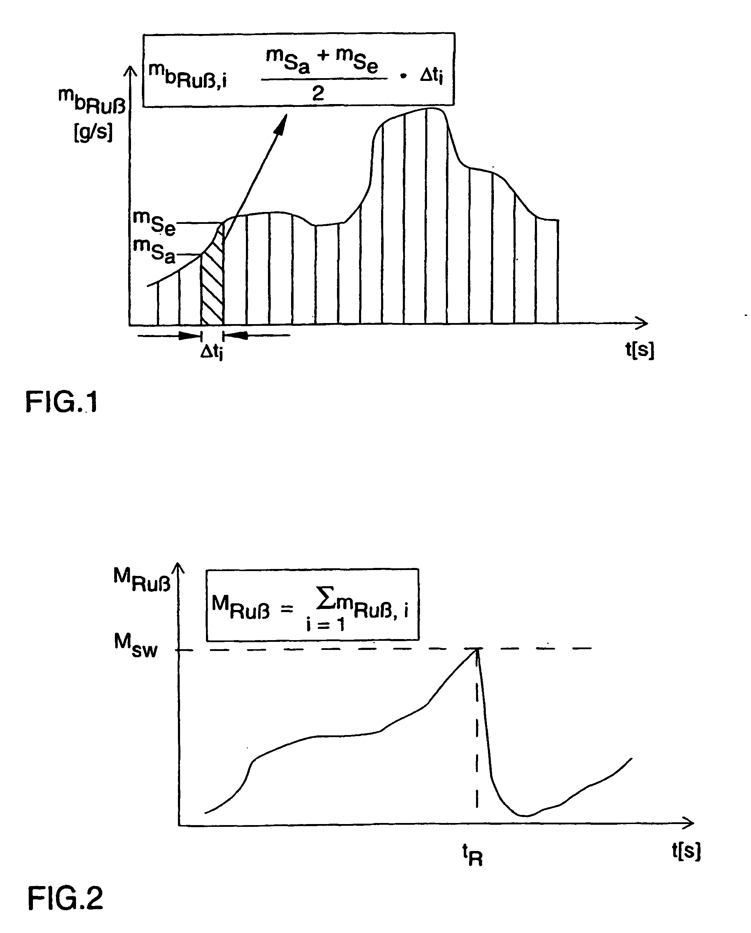

In Figur 1 ist beispielhaft ein Verlauf eines Rußmassenstroms $\dot{m}_{\text{Ruß}}$ eines Dieselmotors in Abhängigkeit von der Zeit t dargestellt. Der Rußmassenstrom $\dot{m}_{\text{Ruß}}$, der die Dimension einer Masse pro Zeit hat, zeigt einen zeitlich stark veränderlichen Verlauf in Abhängigkeit einer Vielzahl von Betriebsparametern des Dieselmotors. Die relevanten Betriebsparameter sind in erster Linie die angesaugte Luftmasse $m_L$, die zugeführte Kraftstoffmasse $m_K$ sowie die Motordrehzahl n. Starke Anstiege des Verlaufs des Rußmassenstroms $\dot{m}_{\text{Ruß}}$ werden beispielsweise in Beschleunigungsphasen beobachtet. Hingegen weist unter konstanten Betriebsbedingungen der Verlauf der Kurve Plateaus auf, in denen der Rußdurchsatz annähernd konstant ist.

Erfindungsgemäß wird nun die in einem vorgegebenen Zeitintervall $\Delta t_i$ durchgesetzte Rußmasse $m_{\text{Ruß},i}$ mit der Dimension einer Masse dadurch ermittelt, daß ein mittlerer Rußmassenstrom $\dot{m}_i$ für das betreffende Zeitintervall $\Delta t_i$ berechnet wird und mit der Länge des Zeitintervalls multipliziert wird, mit anderen Worten, es erfolgt eine numerische Flächenbestimmung unterhalb der Kurve. Der mittlere Massenstrom $\overline{\dot{m}_i}$ wird in einfacher Weise dadurch angenähert, daß das arithmetische Mittel aus dem Anfangsmassenstrom $\dot{m}_A$ und dem Endmassenstrom $\dot{m}_E$ des betrachteten Zeitintervalls $\Delta t_i$ gebildet wird. Die Genauigkeit dieser Näherung steigt mit kleiner werdendem Zeitintervall $\Delta t$. Verfahrensgemäß

werden Zeitintervalle $\Delta t$ im Bereich von 0,01 bis 10 s, bevorzugterweise 0,5 s, appliziert. Wie bereits oben erläutert wurde, ergeben sich die Massenströme $\dot{m}_A$, $\dot{m}_E$ aus den betrachteten aktuellen Betriebsparametern anhand empirischer Modelle mittels Kennlinien.

Die integrale Rußmasse $M_{\text{Ruß}}$ ergibt sich erfindungsgemäß in einfacher Weise durch Summation aller in den verstrichenen Zeitintervallen $\Delta t_i$ durchgesetzten Rußmassen $m_{\text{Ruß},i}$. Einen beispielhaften Verlauf der integralen Rußmasse $M_{\text{Ruß}}$ in Abhängigkeit von der Zeit zeigt Figur 2. Die integrale Rußmasse $M_{\text{Ruß}}$, die der Rußbeladung des Partikelfilters entspricht, zeigt mit zunehmender Betriebsdauer des Dieselmotors einen stetigen Anstieg. Ein Regenerationserfordernis ist nach dem erfindungsgemäßen Verfahren dadurch gegeben, daß die integrale Rußmasse $M_{\text{Ruß}}$ einen vorgegebenen Grenzwert für die Rußbeladung MSW überschreitet. Zu diesem Zeitpunkt ($t_R$) wird mit einer der an sich bekannten Methoden ein Regenerationsvorgang des Partikelfilters ausgelöst. Während der Filterregeneration nimmt die integrale Rußmasse $M_{\text{Ruß}}$ rasch ab, um im normalen Fahrzeugbetrieb wieder stetig anzusteigen.

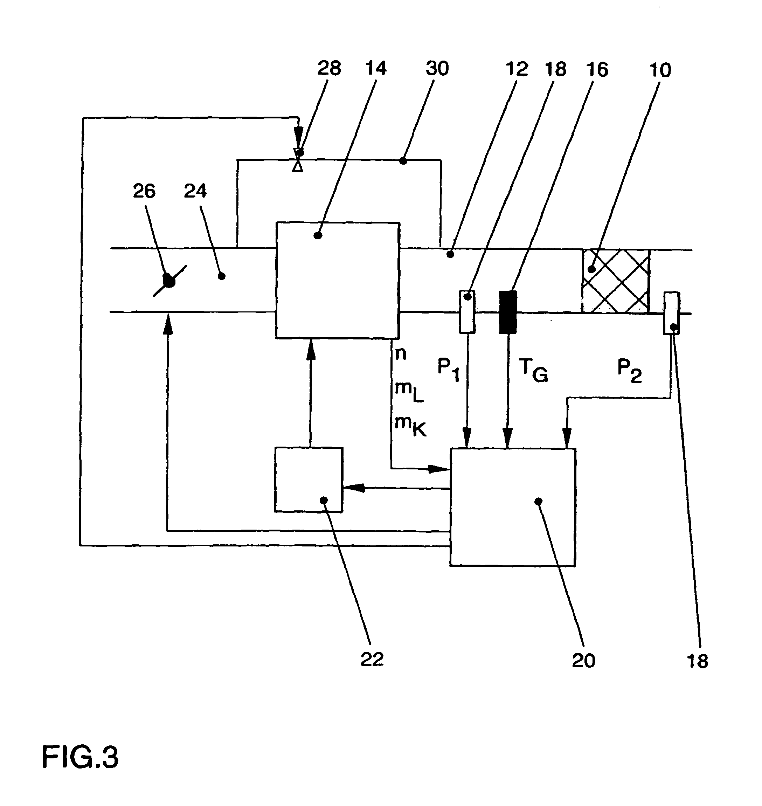

Figur 3 stellt die Anordnung eines Partikelfilters 10 in einem Abgasstrang 12 eines Dieselmotors 14 (Brennkraftmaschine) dar. Im Abgasstrang 12 können an verschiedenen Stellen Gas-, Temperatur- oder Drucksensoren angeordnet sein. Im vorliegenden Beispiel sind dies die Temperatursonde 16, die eine Abgastemperatur $T_G$ vor dem Partikelfilter 10 mißt, und die Drucksensoren 18, welche die Gasdrücke $p_1$, $p_2$ vor und hinter dem Partikelfilter 10 messen. Die von der Temperatursonde 16 und den Drucksensoren 18 erfaßten Signale werden an ein Motorsteuergerät 20 übermittelt.

Darüber hinaus finden Betriebsparameter des Dieselmotors 14, beispielsweise die Motordrehzahl n, die angesaugte Luftmasse $m_L$, die eingespritzte Kraftstoffmasse $m_K$, Eingang in das Motorsteuergerät 20. Die Filtertemperatur $T_F$ kann aus der Temperatur vor dem Partikelfilter 10 und anderen Parametern berechnet werden, beispielswiese aus dem Druckabfall $\Delta p$ über dem Filter 10, der Motordrehzahl n, der Motorlast etc. Über das Motorsteuergerät 20 kann in bekannter Weise zum Beispiel ein Einspritzsystem 22 oder die Stellung einer Drosselklappe 26 in einem Ansaugrohr 24 und/oder eines Abgasrückführventils 28 in einer Abgasrückführleitung 30 gesteuert werden. Das Motorsteuergerät 20 führt anhand der eingelesenen Größen zunächst die Ermittlung der im aktuellen Zeitintervall $\Delta t_i$ durchgesetzten Rußmasse $m_{\text{Ruß},i}$ aus. Ein hierfür erforderliches Kennfeld ist im Motorsteuergerät 20 abgespeichert. Die Berechnung der integralen Rußmasse $M_{\text{Ruß}}$, also der Filterbeladung, erfolgt anschließend in jedem Zeitintervall neu, indem das Motorsteuergerät 20 die im aktuellen Zeitintervall $\Delta t_i$ durchgesetzte Rußmasse $m_{\text{Ruß},i}$ zu der letzten abgespeicherten integralen Rußmasse $M_{\text{Ruß}}$ addiert. Das Motorsteuergerät 20 stellt ferner bei Überschreitung des Grenzwertes für die Rußbeladung $M_{\text{sw}}$ eine Regenerationsnotwendigkeit zum Zeitpunkt $t_R$ fest und leitet die Regeneration ein, indem es beispielsweise die Betriebsparameter des Dieselmotors 14 vorübergehend derart beeinflußt, daß die Abgastemperatur $T_G$ vor dem Partikelfilter 10 die Rußentzündungstemperatur erreicht.

Die beschriebenen Maßnahmen des erfindungsgemäßen Verfahrens ermöglichen die Ermittlung eines Beladungszustandes eines Partikelfilters, basierend auf der kontinuierlichen Erfassung aktueller Betriebsparameter der Verbrennungskraftmaschine, so daß der Regenerationsprozeß des Partikelfilters mit hoher Genauigkeit auf den Beladungszustand des Filters abgestimmt werden kann. Gegenüber bekannten Verfahren kann somit eine thermische Schädigung des Partikelfilters vermieden werden. Gleichzeitig kann die für die Regeneration aufzuwendende Kraftstoffmenge auf ein Mindestmaß beschränkt werden.

**Patentansprüche**

1.  Verfahren zur Ermittlung eines Beladungszustandes eines Partiketfilters einer Verbrennungskraftmaschine, insbesondere eines Dieselmotors, wobei basierend auf der Erfassung wenigstens eines aktuellen Betriebsparameters der Verbrennungskraftmaschine (14) in vorgebbaren Zeitintervallen ($\Delta t$) eine im aktuellen Zeitintervall ($\Delta t_i$) durchgesetzte Rußmasse ($m_{Ruß,i}$) berechnet und durch Summierung der durchgesetzten Rußmassen ($m_{Ruß,i}$) verstrichener Zeitintervalle ($\Delta t_i$) eine integrale Rußbeladung ($M_{Ruß}$) ermittelt wird, wobei der wenigstens eine Betriebsparameter eine Motordrehzahl (n), eine angesaugte Luftmasse ($m_L$) und/oder eine zugeführte Kraftstoffmasse ($m_K$) ist, **dadurch gekennzeichnet, daß** die Berechnung der im aktuellen Zeitintervall ($\Delta t_i$) durchgesetzten Rußmasse ($m_{Ruß,i}$) aus den aktuellen Betriebsparametern anhand eines in einem Kennfeld abgelegten empirischen Modells erfolgt, wobei zusätzliche Betriebsparameter, nämlich eine Abgastemperatur vor dem Partikelfilter ($T_G$), eine Temperatur des Partikelfilters ($T_F$), und/oder ein atmosphärischer Druck ($p_0$) in die Berechnung der im aktuellen Zeitintervall durchgesetzten Rußmasse ($m_{Ruß,i}$) einfließen.

2.  Verfahren nach Anspruch 1, **dadurch gekennzeichnet, daß** die integrale Rußbeladung ($M_{Ruß}$) mit einem vorgebbaren Grenzwert für die Rußbeladung ($M_{SW}$) verglichen wird und bei Überschreitung des Grenzwertes ein Regenerationsvorgang des Partiketfilters ausgelöst wird.

3.  Verfahren nach einem der vorhergehenden Ansprüche, **dadurch gekennzeichnet, daß** das vorgebbare Zeitintervall 0,01 bis 10 s, vorzugsweise 0,5 s, beträgt.

**Claims**

1.  Method for determining a loading state of a particulate filter of an internal combustion engine, in particular a diesel engine, in which a mass of particulates ($m_{particulates,i}$) which has passed through in the current time interval ($\Delta t_i$) is calculated on the basis of the recording of at least one current operating parameter of the internal combustion engine (14) in predeterminable time intervals ($\Delta t$), and an integral particulate loading ($m_{particulates}$) is determined by summing the mass of particulates ($m_{particulates,i}$) which are passed through in elapsed time intervals ($\Delta t_i$), the at least one operating parameter being an engine speed (n), an intake air mass ($m_L$) and/or a feed fuel mass ($m_K$), **characterized in that** the mass of particulates ($m_{particulates,i}$) which has passed through in the current time interval ($\Delta t_i$) is calculated from the current operating parameters on the basis of an empirical model stored in a characteristic diagram, with additional operating parameters, namely an exhaust-gas temperature upstream of the particulate filter ($T_G$), a temperature of the particulate filter ($T_F$) and/or an atmospheric pressure ($P_0$) also being incorporated in the calculation of the mass of particulates ($m_{particulates,i}$) which has passed through in the current time interval.

2.  Method according to Claim 1, **characterized in that** the integral particulate loading ($M_{particulates}$) is compared with a predeterminable limit value for the particulate loading ($M_{SW}$), and if the limit value is exceeded, a regeneration operation for the particulate filter is triggered.

3.  Method according to one of the preceding claims, **characterized in that** the predeterminable time interval lasts for from 0.01 to 10 s, preferably 0.5 s.

**Revendications**

1.  Procédé pour déterminer un état de chargement d'un filtre à particules d'un moteur à combustion interne, en particulier d'un moteur Diesel, dans lequel, en se basant sur l'acquisition d'au moins un paramètre de fonctionnement actuel du moteur à combustion interne (14) à des intervalles de temps prédéterminés ($\Delta t$), on calcule une masse de suie ($m_{Ruß,i}$) accumulée au cours de l'intervalle de temps actuel ($\Delta t_i$) et un chargement total en suie ($M_{Ruß}$) est déterminé par addition des masses de suie accumulées ($m_{Ruß,i}$) au cours des intervalles de temps écoulés ($\Delta t_i$), ledit paramètre de fonctionnement étant au moins un régime du moteur (n), une masse d'air aspirée ($m_L$) et/ou une masse de carburant injectée ($m_K$), **caractérisé en ce que** le calcul de la masse de suie ($m_{Ruß,i}$) accumulée au cours de l'intervalle de temps actuel ($\Delta t_i$) a lieu à partir des paramètres de fonctionnement actuels à l'aide d'un modèle empirique transposé dans un diagramme caractéristique, des paramètres de fonctionnement supplémentaires, à savoir une température des gaz d'échappement avant le filtre à particules ($T_G$), une température du filtre à particules ($T_F$) et/ou la pression atmosphérique ($p_0$) étant utilisés dans le calcul de la masse de suie accumulée dans l'intervalle de temps actuel ($m_{Ruß,i}$).

2. Procédé selon la revendication 1, **caractérisé en ce que** le chargement total de suie ($M_{Ruß}$) est comparé à une valeur limite prédéterminée de chargement de suie ($M_{SW}$) et **en ce qu'**un processus de régénération du filtre à particules est déclenché en cas de dépassement de la valeur limite.

3. Procédé suivant l'une quelconque des revendications précédentes, **caractérisé en ce que** l'intervalle de temps prédéterminé se situe entre 0,01 et 10 s et est de préférence de 0,5 s.

$$m_{b\text{Ruß},i} \quad \frac{m_{S_a} + m_{S_e}}{2} \cdot \Delta t_i$$

FIG.1

$$M_{\text{Ruß}} = \sum_{i=1} m_{\text{Ruß},i}$$

FIG.2

EP 1 108 866 B1

FIG.3

7